Europäisches Patentamt

European Patent Office

Office européen des brevets

(19)

(11) **EP 0 894 292 B1**

(12) **EUROPÄISCHE PATENTSCHRIFT**

(45) Veröffentlichungstag und Bekanntmachung des Hinweises auf die Patenterteilung:
**22.12.1999 Patentblatt 1999/51**

(21) Anmeldenummer: **97920709.9**

(22) Anmeldetag: **17.04.1997**

(51) Int Cl.$^6$: **G05B 11/16**, F16H 61/02

(86) Internationale Anmeldenummer:
**PCT/EP97/01934**

(87) Internationale Veröffentlichungsnummer:
**WO 97/40426 (30.10.1997 Gazette 1997/46)**

(54) **ELEKTRONISCHE STEUERUNG FÜR EIN STEUERSYSTEM FÜR EIN GETRIEBE**

ELECTRONIC CONTROL FOR A CONTROL SYSTEM FOR A GEARBOX

ORGANE DE REGULATION ELECTRONIQUE POUR UN SYSTEME DE REGULATION D'UNE BOITE DE VITESSES

(84) Benannte Vertragsstaaten:
**DE FR GB IT SE**

(30) Priorität: **19.04.1996 DE 19615519**

(43) Veröffentlichungstag der Anmeldung:
**03.02.1999 Patentblatt 1999/05**

(73) Patentinhaber: **Voith Turbo GmbH & Co. KG**
**89522 Heidenheim (DE)**

(72) Erfinder:
 • **DIETZEL, Bernd**
 **D-89428 Syrgenstein (DE)**
 • **BEK, Manfred**
 **D-89520 Heidenheim (DE)**

(74) Vertreter: **Dr. Weitzel & Partner**
 **Friedenstrasse 10**
 **89522 Heidenheim (DE)**

(56) Entgegenhaltungen:
 **DE-A- 3 225 254          DE-C- 4 012 577**
 **US-A- 4 855 913          US-A- 5 251 091**
 **US-A- 5 461 563**

 • **PATENT ABSTRACTS OF JAPAN vol. 095, no. 007, 31. August 1995 & JP 07 091530 A (TOYOTA MOTOR CORP;OTHERS: 01), 4. April 1995,**
 • **VOIGT FORSCHUNG UND KONSTRUKTION, Bd. 33, März 1989, DEUTSCHLAND, Seiten 5.1-5.8, XP002038435 M.BEK: "Elektronisches Steuerungssystem für Automatgetriebe" in der Anmeldung erwähnt**

**Beschreibung**

Die Erfindung betrifft eine elektronische Steuerung gemäß dem Oberbegriff des Anspruches 1 sowie Verfahren zur digitalen Zweipunktregelung.

Bei Getrieben mit hydraulischen und mechanischen Gängen, insbesondere Nutzfahrzeuggetrieben, ist es wünschenswert, je nach Vorwahl der zugehörigen Fahrstufen in Abhängigkeit von Fahrgeschwindigkeit und Motorbelastung das Getriebe so zu steuern, daß stets eine optimale Motorauslastung und Zugkraftanpassung auch bei sehr unterschiedlichen Fahrbedingungen gewährleistet ist. Des weiteren sollen alle vorkommenden Schaltungen unter Last stoßfrei vor sich gehen, unabhängig von der Art des eingesetzten Motors und der gegebenen Ausgleichsgetriebe. Diese Anforderungen an eine Getriebesteuerung werden am besten durch ein elektronisch-hydraulisches Steuerungssystem gelöst, wie beispielsweise in dem Fachbuch "Hydrodynamik in der Antriebstechnik, herausgegeben von der J. M. Voith GmbH, Vereinte Fachverlage Krausskopf-Ingenieur Digest, Mainz, 1987", der DE 36 07 329 oder in dem Aufsatz: M. Bek, "Elektronisches Steuerungssystem für Automatgetriebe" Voith Forschung und Konstruktion, Heft 33 (1989), Voith-Druck G 1225 (3.89) beschrieben.

Aus der DE-A-4012557 ist ein Regelsystem für ein reibungsbehaftetes Stellwerk in einem Kraftfahrzeug bekanntgeworden. Bei diesem System vergleicht ein erster Regler eine erste Größe, die die tatsächliche Stellwerksposition kennzeichnet, mit einer zweiten Größe, die die gewünschte Stellwerksposition kennzeichnet. Der erste Regler berechnet wenigstens eine Eingangsgröße für einen nachgeschalteten 2-Punkt-Regler. Dieser nachgeschaltete 2-Punkt-Regler weist eine variable Hysteresebreite auf, die betriebskenngrößenabhängig steuerbar ist. Der 2-Punkt-Regler dieses Regelsystems ist ein analoger 2-Punkt-Regler.

Das aus der DE 36 07 329 bekannte Steuersystem für ein unter Last schaltbares, mehrstufiges Zahnradgetriebe für Kraftfahrzeuge umfaßt zum Ein- bzw. Umschalten der einzelnen Gangschaltstufen druckmittelbetätigte Schaltelemente in Form von Kupplungs- und/oder Bremselementen, wobei die Druckmittelzufuhr zu jedem Schaltelement durch eine Steuerventil beeinflußt wird und eine Steuerschaltung vorgesehen ist, die in Abhängigkeit verschiedener Betriebsparameter wie z.B. der Antriebsdrehzahl und/oder Abtriebsdrehzahl des Schaltgetriebes und der Stellung des Kraftstoffverteilers ein Umschalten des Schaltgetriebes auslöste. Die aus der DE 36 07 329 bekannte elektronisch-hydraulische Steuerung zeichnete sich dadurch aus, daß das Steuerventil als ein kombiniertes elektromagnetisches Schalt- und Druckregelventil ausgebildet ist, bei dem die Kraft des am Ventilkörper angreifenden und diesen verstellenden Ankers des Elektromagneten durch Änderung der Magnetfeldstärke einregelbar war, wobei im Elektromagneten zur Ermittlung einer den Istwert bildenden Meßgröße für die augenblickliche magnetische Induktion und somit die erzeugte Magnetkraft eine Einrichtung zur Erzeugung einer der zeitlichen Induktions-Änderung proportionalen Meßspannung vorgesehen war, an die wenigstens ein Integrationsglied angeschlossen war, das die Meßspannung in die der Induktion proportionale Meßgröße umwandelt, daß ferner ein Regelglied vorgesehen war, das durch Vergleich des vom Integrationsgliedes abgegebenen Istwertes und eines von der Steuerschaltung vorgegebenen Sollwerts eine Stellgröße für den Erregerstrom des Elektromagneten erzeugte, so daß die Magnetkraft und darüber der Druck des das Schaltelement betätigenden Druckmittels auf einen dem Sollwert entsprechenden Wert eingeregelt wurde, und daß schließlich ein Zeitglied vorgesehen war das den jeweils beim Auslösen einer Umschaltung des Schaltgetriebes beginnenden Regelvorgang des Regelgliedes zeitlich begrenzte, so daß anschließend der Istwert und/oder der Sollwert einen Minimal- oder Maximalwert annahm.

Ausführlich ist ein elektronisches Steuerungssystem für eine derartige, Magnetventile als Aktuatoren verwendende elektronisch-hydraulische Steuerung in M. Bek, "Elektronisches Steuerungssystem", Voith Forschung und Konstruktion, Heft 33 (1989), Voith-Druck G 1225 (3.89) erläutert, dessen Offenbarungsgehalt vollumfänglich in diese Anmeldung miteingeschlossen wird. Die aus dieser Veröffentlichung bekannte elektronisch-hydraulische Steuerung macht sich zu Nutze, daß für den Zusammenhang zwischen Steuerdruck p des hydraulischen Systems und der Kraft $F_m$ des Elektromagneten gilt:

$$p = F_m / A_k$$

mit $A_k$: wirksame Fläche des Steuerkolbens. Andererseits gilt für die vom Elektromagneten abgegebene Kraft bei kleinem Luftspalt näherungsweise:

$$F_m \approx 1/2\, \mu_0\, A \cdot \phi^2$$

mit:

| | |
|---|---|
| $\mu_0$: | Permeabilität der Luft |
| A: | Fläche des Luftspaltes |
| $\phi$: | der vom Erregerstrom $I_e$ hervorgerufene magnetische Fluß |

Um eine Aussage über den Ist-Wert der Magentkraft $F_m$ zu erhalten, was für eine elektronische Regelung derselben und damit des Steuerdruckes p notwendig ist, muß der magnetische Fluß $\phi$ bestimmt werden. Hierzu schlägt die Veröffentlichung (M. Bek, "Elektronisches Steuerungssystem ...", a. a. O.) vor, eine Meßspule in das Magnetfeld der Erregerspule einzubringen. Nach dem Induktionsgesetz kann der Fluß aus der induzierten Spannung durch zeitliche Integration erhalten werden. Als Zusammenhang zwischen Magnetkraft $F_m$ und der induzierten Spannung Um gilt dann:

$$F_m(t) \sim (\int_0^t U_m(t)dt)^2$$

d. h. zur Ermittlung der Ist-Magnetkraft $F_m$ muß die in der Meßspule aufgenommene induzierte Meßspannung integriert werden.

Zur Regelung der Magnetkraft $F_m$ wurden bislang analoge Regler verwendet, die hardwaremäßig verschaltet waren. Die analogen Regler waren als diskrete Zweipunktregler (siehe hierzu auch Dubbel, Taschenbuch für den Maschinenbau, Springerverlag, Berlin, Heidelberg, New York, 1995, Seiten X8 bis X9) ausgeführt. Die Nachteile der aus M. Bek, "Elektronisches Steuerungssystem für Automatgetriebe ..." aao bekannten analogen Zweipunktregler, bei denen in der Regel Komparatoren, beispielsweise in Form von beschalteten Operationsverstärkern, Verwendung fanden, waren beispielsweise:

- aufgrund von Losgrößenschwankungen im Integrationsverhalten der einzelnen zur Ermittlung von $F_m$ verwendeten Integratoren war es notwendig, die analogen Zweipunktregler beispielsweise durch Einlöten von Widerständen auf den verwendeten Integrator abzugleichen.
- beim Multiplexbetrieb, d. h. sequentielle Regelung mehrerer Magnetventile mit ein und demselben elektronischen Regler kann der Regler nur auf einen Integrator abgeglichen werden.
- Einflüsse der Versorgungsspannung $+U_B$ auf die Magnetkraft mußten unberücksichtigt bleiben.

Ein weiterer Nachteil der analogen Regler bestand darin, daß die für das stabile Arbeiten eines digitalen Zweipunktreglers notwendigen Hysterese (siehe auch Dubbel, aao, Seite X8) in diesen Schaltungen dadurch eingestellt wurde, daß Widerstände in die Schaltungsanordnung eingebracht wurden, so daß eine nachträgliche Änderung des Hysteresewertes nicht mehr möglich war.

Des weiteren war jedem Istwerteingang ein Stellausgang durch die Hardware fest zugeordnet. Diese starre Zuordnung hat es nicht zugelassen, mit ein und demselben Regler zwei Magnetventile gleichzeitig steuern zu können.

Aufgabe der Erfindung ist es somit, eine elektronische Steuerung für eine elektro-hydraulische Steuerung eines unter Last schaltbaren Getriebes und ein Verfahren zur Regelung für ein derartiges Getriebe, mit dem die zuvor geschilderten Nachteile des Standes der Technik überwunden werden können, anzugeben.

Die Aufgabe wird gemäß der Erfindung durch eine elektronische Steuerung für ein elektro-hydraulisches Steuersystem für ein Getriebe mit mindestens einem Aktuatorelement nach Anspruch 1 und ein Verfahren zur digitalen Zweipunktregelung mindestens eines Aktuatorelementes einer elektro-hydraulische Steuerung eines Getriebes nach einem der Ansprüche 10 bis 12 gelöst.

Weiterbildungen der Erfindung sind Gegenstand der Unteransprüche. Die Gegenstände der unabhängigen Verfahrensansprüche 10 bis 12 sind gleichberechtigte Lösungen der zuvor definierten Aufgabe.

Gemäß Anspruch 1 wird eine elektronische Steuerung für ein elektro-hydraulisches Steuersystem für ein Getriebe zur Verfügung gestellt, wobei das elektro-hydraulische Steuersystem mindestens ein Aktuatorelement, Mittel zur Aufnahme eines analogen Meßsignales vom Aktuatorelement bzw. Meßsignalen, wenn mit ein und derselben elektronischen Steuerung mehrere Aktuatorelemente geregelt werden sollen. Die elektronische Steuerung umfaßt des weiteren Mittel zur Bildung eines Istwertes des Aktuatorelementes bzw. der Aktuatorelemente aus dem aufgenommenen analogen Meßsignal. Dieses Meßsignal wird zur Regelung der (des) Aktuatorelemente(s) verwendet. Gemäß dem kennzeichnenden Teil der Erfindung umfaßt die elektronische Steuerung einen A/D-Wandler, der in einer ersten Ausführungsform zwischen analogen Istwertbildner und Rechnereinrichtung geschaltet ist, und dazu dient den analogen Istwert des Aktuatorelementes in einen digitalen Istwert zu wandeln. Dieser digitale Istwert wird sodann einer Rechnereinrichtung, vorzugsweise einem Mikrocomputer, zugeführt. Alternativ hierzu kann vorgesehen sein, den A/D-Wandler vor einem digitalen Istwertbildner anzuordnen. Bei einer derartigen Ausführungsform wird der analoge Meßwert in einen digitalen Meßwert gewandelt und aus dem digitalen Meßwert im digitalen Istwertbildner ein digitaler Istwert gebildet, der sodann einer Rechnereinrichtung zugeführt wird. Besonders vorteilhaft ist es, wenn der digitale Istwertbildner, der beispielsweise ein Integrator sein kann, in die Rechnereinrichtung, beispielsweise den Mikrocomputer, integriert und softwaremäßig realisiert ist.

Mit Hilfe eines in der Rechnereinheit hinterlegten Rechnerprogrammes wird eine digitale Zweipunktregelung des nunmehr digital gewandelt vorliegenden Istwertes auf einen dem Rechner zugeführten bzw. in ihm hinterlegten digitalen Sollwert anhand eines zyklisch aufgerufenen Soll-Istwert-Vergleiches vorgenommen. Das aufgrund dieser Regelung ermittelte Stellsignal wird sodann ausgegeben und einem Ausgangstreiber zur Ansteuerung des Aktuatorelementes ausgegeben. In einer besonderen Ausführungsform kann vorgesehen sein, dieses Stellsignal wiederum mit Hilfe eines Digital-Analog-Wandlers von einem digitalen in ein analoges Signal umzusetzen. Ein besonderer Vorteil der digitalen Signalverarbeitung gemäß der Erfindung gegenüber den bislang verwandten elektronischen Steuerungen für elektro-hydraulische Getriebe auf analoger Basis ist darin zu sehen, daß auf sehr einfache Art und Weise Toleranzen der Bauelemente des Istwertbildners oder der Verstärkerschaltungen ausgeglichen werden können und eine Normierung der elektronischen Steuerung vorgenommen werden kann. Dies ist insbesondere dann von Vorteil, wenn mit ein und derselben elektronischen Steuerung die Regelung mehrerer Aktuatorelemente beispielsweise im Multiplexbetrieb übernommen werden soll. In einem derartigen Fall war es bei analoger Zweipunktregelung bislang nur möglich Toleranzen der Bauelemente eines Kanales zu kompensieren bzw. normieren, wo hingegen die anderen Kanäle unabgeglichen bleiben mußten.

Die Normierung des digitalen Zweipunktreglers kann auf einfache Art und Weise mit Hilfe einer Referenzmessung vorgenommen werden. Bei der Referenzmessung wird der für die individuelle elektronische Steuerung erhaltene Wert mit einem Referenzwert verglichen und hieraus ein Korrekturfaktor bestimmt. Dieser Korrekturfaktor wird dann vorzugsweise in einem Speicherbereich der Rechnereinheit hinterlegt. Da der Korrekturfaktor die individuellen Toleranzen der verwendeten Bauelemente berücksichtigt, bleibt er in der vorliegenden Ausführungsform, nachdem er einmal für die elektronische Steuerung bestimmt wurde, fest. Eine Neuermittlung des Korrekturwertes wäre nur dann erforderlich, wenn beispielsweise im Rahmen von Reparaturen Bauelemente in der elektronischen Steuerung, beispielsweise der Istwertbildner, getauscht werden müßten.

Besonders bevorzugt ist eine Korrektur des Sollwertes, da dieser sich wesentlich langsamer ändert als der Istwert. Durch diese Maßnahme kann bei der digitalen Zweipunktregelung Rechenkapazität eingespart werden.

Da ein bevorzugtes Einsatzgebiet der erfindungsgemäßen elektronischen Steuerung ein elektrohydraulisches Steuersystem für ein Getriebe ist, sind die Aktuatorelemente mit Vorteil sogenannte Magnetventile, die aufgrund der von der elektronischen Steuerung ausgegebenen Befehle hydraulische Druckänderungen im Getriebe auslösen. Um den Druckverlauf frei einstellen zu können, sind die Magnetventile als Druckregelventile ausgebildet, die einen Hydrauliksteuerkolben mit einem damit verbundenen Elektromagneten umfassen. Durch Einstellen der Magnetkraft ist es dann möglich, die Stellung des Hydrauliksteuerkolbens zu verändern und somit den Druck einzustellen. Derartige Druckregelmagnetventile sind aus dem M. Bek "Elektronisches Steuerungssystem für Automatgetriebe", Sonderdruck aus Voith Forschung und Konstruktion, Heft 33 (1989), Voith Druck G 1225, Seite 5.6 - 5.7, bekanntgeworden, wobei der Offenbarungsgehalt dieser Druckschrift vollumfänglich mit aufgenommen wird.

In einer ersten Ausführungsform der Erfindung ist vorgesehen, daß als analoges Meßsignal für die Magnetkraft des Magnetventiles das induzierte Spannungssignal einer Meßspule herangezogen wird, wobei die Meßspule von dem vom Erregerstrom der Erregerspule des Elektromagneten hervorgerufenen Magnetfeldes durchsetzt wird. Anstelle einer Meßspule könnte auch eine Hall-Sonde oder andere dem Fachmann geläufige Mittel verwendet werden. Soll bei dieser ersten Ausführungsform das in einer Meßspule induzierte Spannungssignal dafür verwendet werden, um auf den Istwert der Magnetkraft zu schließen, so ist es notwendig, dieses analoge Spannungssignal zu integrieren (siehe hierzu beispielsweise M. Bek "Elektronisches Steuerungssystem für Automatgetriebe", aao). In einer derartigen elektronischen Steuerung wird daher das analoge Meßsignal einem als Integrator ausgeführten Istwertbildner zugeführt. In der Regel finden als Integratoren beschaltete Operationsverstärker Verwendung. Je nach Toleranz der für die Beschaltung verwendeten Bauelemente wird der Istwertbildner bei gleichem anliegenden induzierten Spannungssignal einen hierzu gehörigen unterschiedlichen Magnetkraftwert ermitteln. Um ein und dasselbe Regelverhalten bei Verwendung unterschiedlicher Bauelemente zu erhalten, ist es daher notwendig, die Toleranzen dieser Bauelemente zu berücksichtigen, was gemäß der vorliegenden Erfindung dadurch geschieht, daß Referenzmessungen durchgeführt werden.

Neben der Vorrichtung stellt die Erfindung auch ein Verfahren zur digitalen Zweipunktregelung mindestens eines Aktuatorelementes einer elektro-hydraulischen Steuerung eines Getriebes mit Hilfe einer elektronischen Steuerung zur Verfügung, wobei Referenzmessungen zur Bestimmung von Korrekturfaktoren für die elektronische Regelung des (der) Akturatorelemente durchgeführt und der (die) Referenzwert(e) in einem ersten Speicherbereich einer Recheneinheit abgelegt werden. Das Regelungsverfahren für eines der Aktuatorelemente umfaßt dann die folgenden Schritte:

- es wird ein analoges Meßsignal eines Aktuators aufgenommen,
- aus dem analogen Meßsignal wird ein Istwert für das Aktuatorelement gebildet,
- der analoge Istwert wird in einem A/D-Wandler in einen digitalen Istwert gewandelt und in einen ersten Bereich eines Speichers einer Rechnereinrichtung eingelesen.

Gemäß dem Verfahren nach Anspruch 8 erfolgt in einer ersten Variante die digitale Zweipunktregelung derart, daß der in die Rechnereinrichtung eingelesene digitale Istwert mit einem darin abgelegten und korrigierten bzw. abgeglichenen Sollwert verglichen wird und dieser Vergleich Ausgangspunkt für die nachfolgenden Schritte ist. In einer anderen Lösung gemäß dem Verfahrensanspruch 9 wird der digitale Istwert vom korrigierten digitalen Sollwert subtrahiert und je nach Vorzeichen dieser Differenz die nachfolgenden Verfahrensschritte ausgeführt. Gemäß einer weiteren Lösung der Erfindung wie in Anspruch 10 offenbart, wird zum korrigierten digitalen Sollwert ein für diesen Regler charakteristischer digitaler Hysteresewert hinzuaddiert und auf diese Art und Weise die Hysterese des Zweipunktreglers eingestellt. Durch geeignete softwaremäßige Einstellung des Hysterese kann erreicht werden, daß bei Verwendung eines Magnetventils als Aktuatorelement der Kolben des Magnetventils ständig Mikrobewegungen im Steuerblock ausführt, so daß die bei den Regel- bzw. Steuervorgängen störende Haftreibung überwunden wird.

Mit Vorteil ist des weiteren vorgesehen, daß die Abtastzeit des digitalen Zweipunktreglers im Bereich von 0,1 Millisekunde bis 10 Millisekunden liegt, besonders vorteilhaft ist es, mit einem Abtastintervall von einer Millisekunde zu arbeiten. Das Abtastintervall von ungefähr einer Millisekunde erlaubt es, daß der digitale Zweipunktregler die Regelung des Aktuators in einer ausreichend kurzen Zeit realisiert. Bei sehr schwachem Meßsignal kann vorgesehen sein, dieses analoge Signal mit Hilfe einer Verstärkerschaltung für die Rechnereinrichtung aufzubereiten. Wird als Aktuatorelement die Magnetspule eines Magnetventils verwendet, so ist diese in einer bevorzugten Ausführungsform der Erfindung Teil der elektrohydraulischen Steuerung eines Getriebes. Die bevorzugten Getriebe sind dabei sogenannte Differential-Wandler-Getriebe, sogenannte DIWA-Getriebe.

Nachfolgend soll die Erfindung anhand von Ausführungsbeispielen und den Figuren näher beschrieben werden.

Es zeigen:

Fig. 1 eine erfindungsgemäße elektronische Schaltung für ein elektro-hydraulisches Steuersystem, wobei das analoge Meßsignal der Spulenstrom i(t) ist;

Fig. 2 eine erfindungsgemäße elektronische Schaltung, wobei das analoge Meßsignal die induzierte Spannung (U(t)) in einer Meßspule ist;

Fig. 3 Blockschaltbild der Magnetkraftregelung gemäß dem Stand der Technik;

Fig. 4 elektronische Schaltung für ein elektronisch-hydraulisches Steuersystem gemäß dem Stand der Technik;

Fig. 5 das Flußdiagramm eines digitalen Zweipunktreglers, der in der Erfindung verwendet wird und nach der Vergleichsmethode arbeitet;

Fig. 6 das Flußdiagramm eines digitalen Zweipunktreglers, wie er in der Erfindung verwendet wird mit einem Hysteresebeitrag;

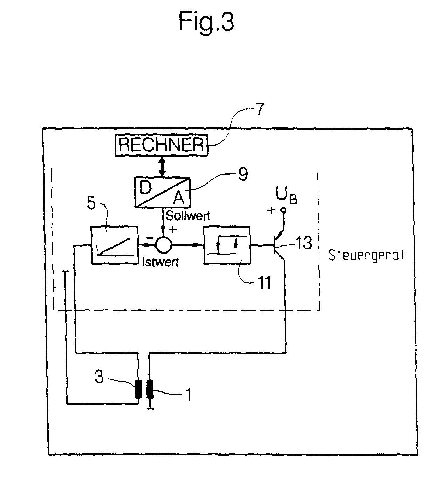

In Fig. 3 ist ein Blockschaltbild der Magnetkraftregelung eines Magnetventiles, des in einer elektro-hydraulischen Steuerung eines Getriebes Verwendung findet gemäß dem Stand der Technik dargestellt (M. Bek "Elektronisches Steuerungssystem für Automatgetriebe" aao). Die Ermittlung der Magnetkraft erfolgt bei dieser Ausführungsform durch Messen der Flußänderung in einer Meßspule 3, die im Magnetfeld der Erregerspule 1 angeordnet ist. Das analoge Meßsignal der Meßspule 3 wird zu einem Istwertbildner 5, der aus dem analogen Meßwert einen Magnetkraft-Istwert bildet, geführt. In vorliegendem Fall handelt es sich bei dem Istwertbildner 5 um einen Integrator. Der Sollwert der Regelung ist in einem Rechner 7 abgelegt und wird aus diesem ausgelesen, und mit Hilfe des D/A-Wandlers 9 in ein analoges Signal gewandelt. Ein Soll-Istwert-Vergleich wird vorgenommen und der Zweipunktregier 11 regelt entsprechend dieses Soll-Istwert-Vergleiches den Strom durch die Erregerspule 1 und damit die Magnetkraft des Magnetventiles durch Ausgabe eines Stellsignales, das an Transistor 13 anliegt.

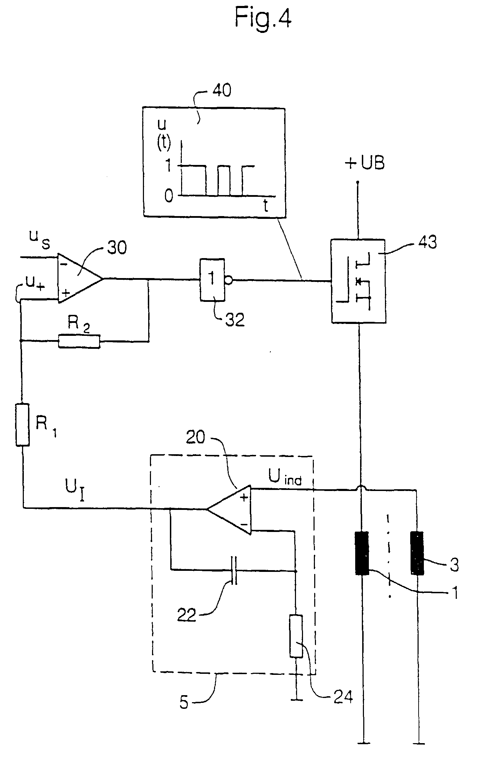

In Fig. 4 ist die Schaltung für die in Fig. 3 dargestellte Steuerung gemäß dem Stand der Technik für die Magnetspule 1 des nicht dargestellten Magnetventiles gezeigt. Bevorzugt finden die Magnetventile in einer nicht dargestellten elektro-hydraulischen Steuerung eines Getriebes Verwendung. Vorliegend wird als Meßsignal für die Istwertbildung der Magnetkraftregelung, die in der Meßspule 3 aufgrund von Änderungen des Magnetfeldes der Erregerspule 1 des Magnetventiles induzierte Spannung $U_{ind.}$ verwendet. Das Meßsignal $U_{ind.}(t)$ wird einem Istwertbildner 5 zugeführt. Der Istwertbildner 5 ist vorliegend ein Integrator umfassend einen dementsprechend beschalteten Operationsverstärker 20. Wie aus dem Stand der Technik (Dubbel, Taschenbuch für den Maschinenbau, Springer-Verlag 1995, Seiten W23-W31) bekannt, umfaßt der als Integrator beschaltete Operationsverstärker 20 als Bauelemente einen Kondensator 22 und einen Widerstand 24. Abhängig von den Bauelementen liegt am Ausgang des Integrators das der Magnetkraft entsprechende Spannungssignal $U_t$ an. Dieses Signal wird dem als Komparator geschalteten Operationsverstärker 30 analog zugeführt. Am positiven Eingang des Komparators 30 liegt gemäß der dargestellten Schaltung eine Spannung $U_+$ an, die dem Istwert $U_I$ minus dem über dem Widerstand R1 abgefallenen Spannungswert entspricht. Der zwischen dem positiven Eingang und dem Ausgang des Operationsverstärkers geschaltete Widerstand R2 bestimmt die Hysterese des dargestellten Reglers. Im als Komparator 7 geschalteten Operationsverstärker wird der Spannungswert U+ mit dem analogen Sollspannungswert $U_s$ verglichen und aus dem Vergleich der analogen Signale ein binäres Signal erhalten, das eine logische 1 (EINS) bzw. 0 (NULL) darstellt. Das binäre Signal wird einem Inverter 32 zugeführt, so daß ein invertiertes Spannungssignal gemäß Darstellung 40 am Ausgang des Inverters anliegt. Das Ausgangssignal 40 des Inverters treibt einen Ausgangstreiber 42, der mit einer Spannung $+U_B$ versorgt wird. Der Ausgangstreiber 42 treibt die zu regelnde Magnetspule 1. Die Kompensation von Bauteiltoleranzen der Bauteile des Istwertbildners erfolgt durch den Widerstand 24. Gemäß dem Stand der Technik muß somit der Hysteresewert des Reglers durch den Widerstand R2 eingestellt werden, sowie die Toleranzen des Istwertbildners durch Widerstand 24 abgeglichen werden.

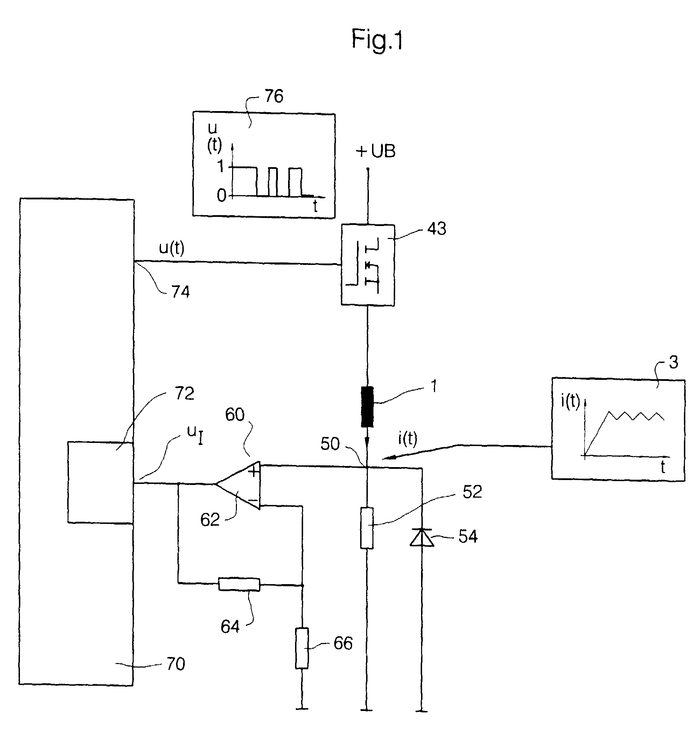

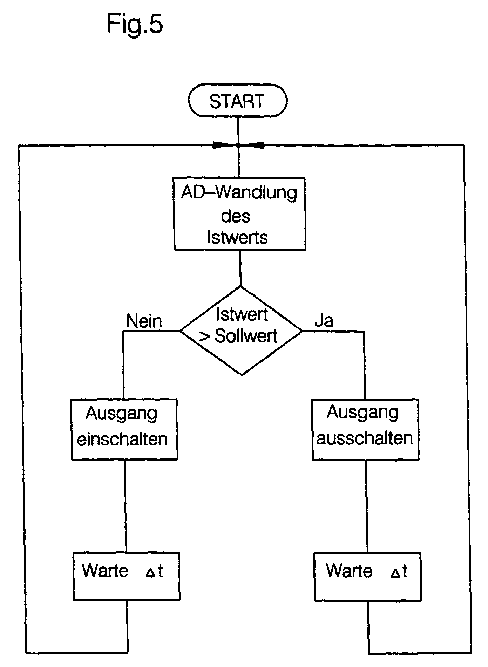

In Fig. 1 ist eine erste Ausführungsform der erfindungsgemäßen Schaltung dargestellt. Wie bei den Schaltungen Zweipunktregler nach dem Stand der Technik wird durch die in Fig. 1 dargestellte erfindungsgemäße Schaltung eine Magnetspule eines Magnetventils geregelt. Selbstverständlich ist es denkbar, anstelle der Magnetspule auch andere Betätigungselemente in Abhängigkeit von einem Sollwert mit der dargestellten Schaltung gemäß Fig. 1 zu steuern. In der vorliegenden Ausführungsform wird als Meßsignal zur Bildung des Istwertes der Magnetkraft der Strom i(t) im Punkt 50 der Schaltung aufgenommen und über Meßwiderstand 52 in einen Spannungswert gewandelt. Parallel zum Meßwiderstand 52 ist eine Löschdiode 54 geschaltet. Das Meßsignal wird in einer Verstärkerschaltung 60 zur Bildung des Istwertes, umfassend mindestens einen Operationsverstärker 62 und Widerstände 64, 66, verstärkt und als analoger Istwert $U_t$ der Rechnereinrichtung 70, die in vorliegendem Fall ein Mikrocomputer ist, zugeführt. Das analoge Istwert-Spannungssignal wird durch einen A/D-Wandler 72 von einem analogen in ein digitales Signal gewandelt und in einem digitalen Speicherbereich der Rechnereinrichtung 70 abgelegt. Eine Kompensation bzw. Abgleich der Toleranzen der Bauelemente des Istwertbildners, vorliegend der Widerstände 62, 64 des als Verstärker beschalteten Operationsverstärkers, wird mit Hilfe von Referenzmessungen vorgenommen, wobei ein Korrekturfaktor K bestimmt wird, der in einem Korrekturfaktor-Speicherbereich der Rechnereinrichtung 70 abgelegt wird. Der digitale Istwert wird in einer ersten Ausführungsform gemäß einem Flußdiagramm nach Fig. 5 mit einem in einem zweiten Bereich der Rechnereinrichtung bzw. Steuereinrichtung 70 abgelegten in den Korrekturfaktor der individuellen Schaltung modifizierten Sollwert verglichen. Ist der Istwert größer oder gleich dem in der Rechnereinrichtung gespeicherten korrigierten Sollwert, so wird der Ausgang 74 der Rechnereinrichtung 70 ausgeschaltet, d.h. auf eine logische NULL gesetzt. Ist hingegen der Istwert kleiner als der korrigierte Sollwert, so wird der Ausgang 74 eingeschaltet, d.h. auf eine logische EINS gesetzt. Das Einlesen eines neuen Istwertes über den A/D-Wandler, an dem ständig ein analoges Signal anliegt, wird nach einer Abtastzeit $\Delta t$ durchgeführt und der zuvor aufgestellte Vergleich von digitalem Ist- und korrigiertem Sollwert erneut vorgenommen. In der Summe resultiert am Ausgang 74 der in der Abbildung 76 dargestellte Spannungsverlauf. Als Abtastintervall kann entsprechend dem Einsatzfall des Reglers eine Abtastzeit von 0,1 Millisekunde bis 10 Millisekunden gewählt werden. Als besonders geeignet für eine schnelle und zufriedenstellende Regelung hat sich ein Abtastintervall von einer Millisekunde herausgestellt. Vorteilhafterweise kann das Einlesen von Istwerten in den A/D-Wandler zum Umsetzen von einem analogen in einen digitalen Wert und/oder die Rechnereinrichtung 70 mit Hilfe eines zyklisch aufgerufenen Interrupts erfolgen.

Das ausgangsseitige Signal U(t) treibt wie bei der Ausführung gemäß Fig. 4 einen Ausgangstreiber 43, der mit der Magnetspule 1 verbunden ist.

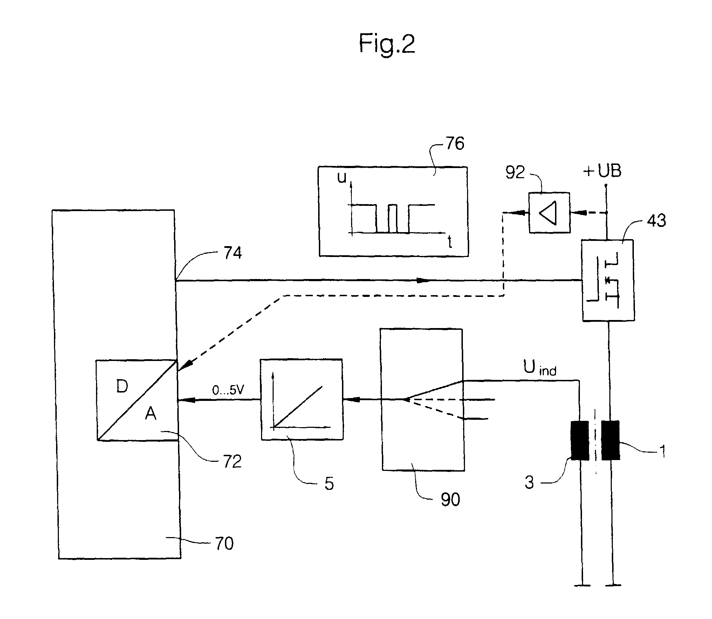

In Fig. 2 ist eine zweite Ausführungsform der erfindungsgemäßen Schaltung dargestellt. Gleiche Bauteile wie in Fig. 1 werden mit gleichen Bezugsziffern bezeichnet. Wie bei der Schaltung gemäß Fig. 1 wird in der in Fig. 2 dargestellten eine Magnetspule 1 eines Magnetventiles geregelt. Als Meßsignal zur Bildung des Istwertes der zu regelnden Magnetkraft des Magnetventiles wird die durch Änderung des Magneffeldes induzierte Spannung $U_{ind.}$ einer im Magnetfeld der Erregerspule angeordneten Meßspule 3 aufgenommen. Da nach dem Induktionsgesetzt gilt:

$$U_m(t) \sim d\phi / dt$$

und andererseits für die Magnetkraft

$$F_m \sim \phi$$

muß als Istwertbildner zur Bildung des Magnetkraft-Istwertes aus dem aufgenommenen analogen Meßsignal wie im Blockschaltbild nach Fig. 3 ein Integrator eingesetzt werden. Dieser Integrator ist vorzugsweise ein beschalteter Operationsverstärker wie in Fig. 4 dargestellt. Sollen eine Vielzahl von Magnetventilen mit ein und derselben Regelung geregelt werden, so erfolgt dies bevorzugt im Multiplexbetrieb, d. h. durch serielle Regelung eines jeden einzelnen Magnetventiles. Hierzu werden die Meßleitung der einzelnen Meßspulen 3 der zu regelnden Magnetventile 1 einem sogenanten Multiplexer 90 zugeführt, der dem Integrator vorangestellt ist. Mit Hilfe des Multiplexers werden die einzelnen Kanäle seriell abgefragt und dem Istwertbildner 5 zugeführt. Nach Integration des Spannungssignals der jeweiligen Meßspule mit Hilfe des Integrators 5 liegt am Ausgang des Istwertbildners ein analoges Istwertsignal an, das die Magnetkraft repräsentiert. Dieses Istwertsignal wird nunmehr durch einen A/D-Wandler 72 von einem analogen Signal in ein digitales Signal gewandelt und in einem ersten Speicherbereich der Rechnereinrichtung 70 abgelegt. Eine Kompensation bzw. Abgleich der Toleranzen der Bauelemente des Istwertbildners, vorliegend des Kondensators und des Widerstandes des beschalteten Operationsverstärkers sowie der den verschiedenen Kanälen zugeordneten Meßspulen wird mit Hilfe von Referenzmessungen für jeden einzelnen Kanal vorgenommen. Bei den Referenzmessungen wird für jeden einzelnen Kanal ein Korrekturfaktor $K_1... K_n$ bestimmt, der in einem Korrekturfaktorspeicherbereich der Rechnereinrichtung 70 für jeden einzelnen Kanal abgelegt wird.

In einer alternativen, aber nicht dargestellten, Ausführungsform kann anstelle des analog arbeitenden Integrators ein digitaler Integrator vorgesehen sein, der beispielsweise softwaremäßig in den Mikrocomputer bzw. der Rechnereinrichtung 70 realisiert sein kann. In einer derartigen Ausführungsform wäre der A/D-Wandler direkt hinter Multiplexer 90 und vor einem digitalen Integrator angeordnet.

Der digitale Istwert wird in einer ersten Ausführungsform des digitalen Zweipunktreglers, dessen Flußdiagramm beispielsweise in Fig. 5 dargestellt ist, mit einem in einem zweiten Bereich der Rechnereinrichtung abgelegten Sollwert verglichen. Vorteilhafterweise wird der Sollwert für jeden Kanal mit dem aus den Referenzmessungen ermittelten Korrekturfaktor belegt, da sich dieser weniger schnell ändert als der Istwert. Ist der Istwert größer oder gleich dem in der Rechnereinrichtung gespeicherten für den jeweiligen Kanal korrigierten Sollwert, so wird der Ausgang 74 der Rechnereinrichtung 70 ausgeschaltet, d .h. auf eine logische NULL gesetzt. Ist hingegen der Istwert kleiner als der korrigierte Sollwert des jeweiligen Kanals, so wird der Ausgang 74 eingeschaltet, d. h. auf eine logische EINS gesetzt. Das Einlesen eines neuen Istwertes über den A/D-Wandler, an dem ständig ein analoges Signal anliegt, wird nach einer Abtastzeit $\Delta$t für den jeweiligen Kanal durchgeführt und der zuvor aufgestellte Vergleich von digitalem Ist- und korrigierten Sollwert emeut vorgenommen. In der Summe resultiert am Ausgang 74 der in der Abbildung 76 dargestellte Spannungsverlauf. Als Abtastintervall kann entsprechend der Einsatzzeit des Reglers eine Abtastzeit von 0,1 - 10 Millisekunden gewählt werden. Vorteilhafterweise kann das Einlesen von Istwerten in den A/D-Wandler zum Umsetzen von einem analogen in einen digitalen Wert und/oder die Rechnereinrichtung 70 mit Hilfe eines zyklisch aufgerufenen Interrupts erfolgen. Die am Ausgang 74 anliegende Spannung U(t) treibt die bei der Ausführungsform gemäß den Figuren 1 und 4 einen Ausgangstreiber 43, der wiederum mit der Magnetspule 1 verbunden ist.

Als besonders vorteilhaft hat sich herausgestellt, wenn man die Versorgungsspannung +$U_B$ bei der Regelung berücksichtigt. Hierzu wird der aktuelle Spannungswert +$U_B$ ermittelt und nach Verstärkung mittels des Verstärkers 92 ebenfalls dem D/A-Wandler 72 zugeführt und in einem dritten Speicherbereich der Rechnereinrichtung 70 abgelegt. Es ist dann möglich, mit Hilfe eines weiteren Korrekturwertes den Einfluß der Versorgungsspannung +$U_B$ auf die resultierende Magnetkraft durch Berücksichtigung bei der Sollwertvorgabe zu eliminieren.

Selbstverständlich ist es möglich, auch andere Regelungskonzepte in der Rechnereinheit bzw. dem Mikrocomputer 70 für die erfindungsgemäße Schaltung gemäß den Figuren 1 und 2 zu realisieren. Beispielsweise ist es denkbar, daß statt eines direkten Vergleiches von digitalem korrigierten Soll- und Istwert zunächst die Differenz hieraus gebildet wird und eine Ein- bzw. Ausschaltung des Ausgangs 74 je nachdem erfolgt, ob die Differenz größer oder kleiner Null ist.

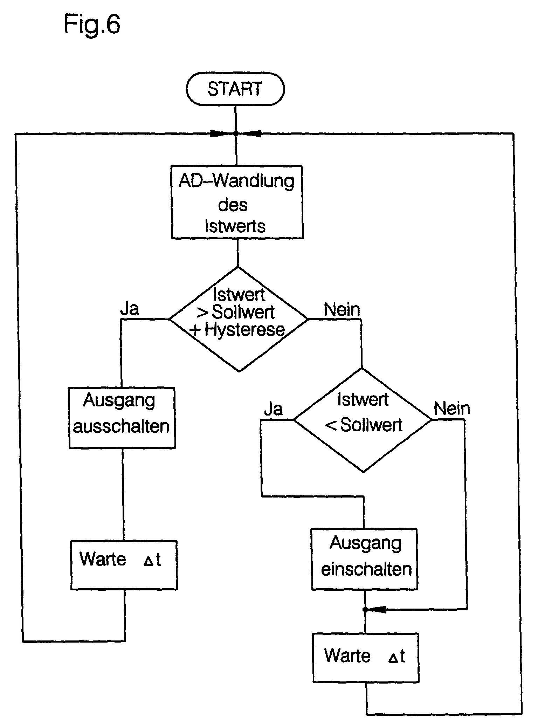

In einer Fortbildung der Erfindung ist es gemäß dem Schaubild nach Fig. 6 auch möglich, die für den stabilen Betrieb eines Zweipunktreglers nötige Hysterese variabel einzustellen. Dies ist insbesondere dann von Vorteil, wenn eine Mikrobewegung des Kolbens des Magnetventils erzeugt bzw. aufrecht erhalten werden soll. Der Ablauf und die Steuerung des Ausgangs 74 der Rechnereinrichtung erfolgt wie nachstehend beschrieben. Ist der von einem analogen Wert $U_I$ in einen digitalen Wert gewandelte Istwert größer oder gleich einem Summenwert aus einem in einem zweiten Bereich der Steuereinrichtung abgelegten korrigiertem Sollwert und einem in einem dritten Bereich abgelegten Hysteresewert, so wird der Ausgang 74 ausgeschaltet, d.h. auf eine logische NULL gesetzt. Ist dies nicht der Fall, so wird in einer weiteren Abfrage geprüft, ob der digitale Istwert kleiner als der digitale korrigierte Sollwert ist. Ist dies der Fall, so wird der Ausgang 74 eingeschaltet, d. h. ausgangsseitig eine logische EINS ausgegeben. Ist der digitale Istwert größer oder gleich dem digitalen korrigierten Sollwert, so wird der Ausgang im Zustand wie vor dem Eingeben des Istwertes in den Computer belassen. Nach einer Abtastzeit $\Delta$t wird ein neuer Wert in die Rechnereinrichtung eingelesen und die zuvor dargestellten Abfragen erneut durchgeführt. Entsprechend dem Abfrageergebnis wird dann der Ausgang entweder ausgeschaltet, eingeschaltet oder in dem Zustand belassen, in dem er sich vor Einlesen des Wertes befand.

Mit der vorliegenden Erfindung ist es somit erstmals möglich, einen Aktuator, der vorzugsweise ein Magnetventil für eine Getriebesteuerung sein kann, digital zu regeln und hierbei Toleranzen von Bauteilen zu berücksichtigen. Dies kann mit Hilfe eines sehr einfachen Schaltungsaufbaues realisiert werden. Des weiteren kann die Schaltung an unterschiedliche Betriebszustände leicht angepaßt werden. Haftreibungsprobleme werden vermieden und Standardbauteile finden Verwendung.

**Patentansprüche**

1. Elektronische Steuerung für ein elektro-hydraulisches Steuersystem für ein Getriebe, wobei das elektro-hydraulische Steuersystem mindestens ein Magnetventil, und Mittel zur Aufnahme eines analogen Meßsignales des Magnetventiles (1) aufweist und die elektronische Steuerung Mittel zur Bildung eines Magnetventil-Istwertes aus dem analogen Meßsignal für die Regelung der (des) Magnetventiles, eine Rechnereinrichtung (70) mit einem Speicher und einem Ausgangstreiber, sowie mindestens ein A/D-Wandler zur Wandlung des analogen Magnetventil-Istwertes in einen digitalen Wert umfasst
dadurch gekennzeichnet, daß
ein digitaler Zweipunktregler zur Regelung der (des) Magnetventile(s) mittels eines zyklisch aufgerufenen Soll-/Istwertvergleiches vorgesehen ist und die Mittel zur Aufnahme des analogen Meßsignales des Magnetventiles eine Meßspule zur Aufnahme eines induzierten Spannungssignales umfassen und der analoge Magnetventil-Istwertbildner ein Integrator zur Bildung eines Magnetkraft-Istwertsignales der (des) Magnetventile(s) aus den (dem) aufgenommenen Spannungsmeßsignalen umfasst.

2. Elektronische Steuerung gemäß Anspruch 1, dadurch gekennzeichnet, daß Mittel zum Abgleich bzw. Normierung des digitalen Zweipunktreglers vorgesehen sind, so daß unabhängig von den Toleranzen der Bauelemente des Istwertbildners und/oder der (des) Magnetventile(s) stets dasselbe Regelverhalten der elektronischen Steuerung für das (die) Magnetventile(s) erzielt wird.

3. Elektronische Steuerung gemäß Anspruch 2, dadurch gekennzeichnet, daß die Mittel zum Abgleich bzw. zur Normierung des digitalen Zweipunktreglers Mittel zum Durchführen von Referenzmessungen und Mittel zum Bestimmen eines Korrekturfaktors für den Sollwert des digitalen Zweipunktreglers umfassen.

4. Elektronische Steuerung gemäß einem der Ansprüche 1 bis 3, dadurch gekennzeichnet, daß die elektronische Steuerung einen Multiplexer zur sequenziellen Regelung einer Vielzahl von Magnetventile umfaßt.

5. Verfahren zur digitalen Zweipunktregelung mindestens eines Magnetventiles einer elektro-hydraulischen Steuerung eines Getriebes mit Hilfe einer elektronischen Steuerung, gemäß einem der Ansprüche 1 bis 4, wobei Referenzmessungen zur Bestimmung von Korrekturfaktoren für die elektronische Regelung des (der) Magnetventile(s) durchgeführt und der (die) Referenzwert(e) in einem Referenzwert-Speicherbereich einer Rechnereinrichtung abgelegt werden, die Regelung eines der Magnetventile umfaßt folgende Schritte:

5.1 es wird ein induziertes Spannungssignal eines Magnetventils (1) aufgenommen;
5.2 aus dem induzierten Spannungssignal wird mittels eines Integrators ein Istwert des Magnetventils gebildet;
5.3 der Istwert wird in einem A/D-Wandler in einen digitalen Istwert gewandelt und in einen ersten Bereich eines Speichers einer Rechnereinrichtung eingelesen;

das Verfahren ist dadurch gekennzeichnet, daß

5.4 der in den ersten Bereich des Speichers eingelesene digitale Istwert wird mit einem in einem zweiten Speicherbereich abgelegten digitalen Sollwert für die Magnetventile veglichen, wobei der Sollwert mit dem Korrekturwert des Magnetventiles, der im Korrekturwertspeicher abgelegt ist, normiert bzw. multipliziert wurde;
5.5 der Ausgang der Rechnereinrichtung zu einem Ausgangstreiber für das (die) Magnetventile wird auf eine logische NULL gesetzt, wenn der digitale Istwert größer oder gleich dem digitalen Sollwert ist und
5.6 der Ausgang der Rechnereinrichtung zum Ausgangstreiber wird auf eine logische EINS gesetzt, wenn der digitale Istwert kleiner als der digitale Sollwert ist und
5.7 nach einer Abtastzeit $\Delta t$ wird erneut ein analoger Istwert des Magnetventiles eingelesen.

6. Verfahren zur digitalen Zweipunktregelung mindestens eines Magnetventiles einer elektro-hydraulischen Steuerung eines Getriebes mit Hilfe einer elektronischen Steuerung, gemäß einem der Ansprüche 1 bis 4, wobei Referenzmessungen zur Bestimmung von Korrekturfaktoren für die elektronische Regelung des (der) Magnetventile(s) durchgeführt und der (die) Referenzwert(e) in einem Referenzwert-Speicherbereich einer Rechnereinrichtung abgelegt werden, die Regelung eines der Magnetventile umfaßt folgende Schritte:

6.1 es wird ein induziertes Spannungssignal eines Magnetventils (1) aufgenommen;
6.2 aus dem induzierten Spannungssignal wird mittels eines Integrators ein Istwert des Magnetventils gebildet;
6.3 der Istwert wird in einem A/D-Wandler in einen digitalen Istwert gewandelt und in einen ersten Bereich eines Speichers einer Rechnereinrichtung eingelesen;

dadurch gekennzeichnet, daß

6.4 die Differenz zwischen dem in den ersten Bereich des Speichers eingelesenen digitalen Istwert und einem in einem zweiten Bereich des Speicherbereiches abgelegten digitalen Sollwert für das Magnetventil gebildet wird;
6.5 der Ausgang der Rechnereinrichtung zu einem Ausgangstreiber für das Magnetventil wird auf NULL gesetzt, wenn die in Schritt 6.4 gebildete Differenz größer oder gleich Null ist;
6.6 der Ausgang der Rechnereinrichtung zum Ausgangstreiber wird auf EINS gesetzt, wenn der in Schritt 6.1 gebildete Differenzwert kleiner als Null ist und
6.7 nach einer Abtstzeit $\Delta t$ wird erneut ein ana-

loges Meßsignal vom Magnetventil eingelesen.

7. Verfahren zur digitalen Zweipunktregelung mindestens eines Magnetventiles einer elektro-hydraulischen Steuerung eines Getriebes mit Hilfe einer elektronischen Steuerung, gemäß einem der Ansprüche 1 bis 4, wobei Referenzmessungen zur Bestimmung von Korrekturfaktoren für die elektronische Regelung des (der) Magnetventile(s) durchgeführt und der (die) Referenzwert(e) in einem Referenzwert-Speicherbereich einer Rechnereinrichtung abgelegt werden, die Regelung eines der Magnetventile umfaßt folgende Schritte:

7.1 es wird ein induziertes Spannungssignal eines Magnetventils (1) aufgenommen;
7.2 aus dem induzierten Spannungssignal wird mittels eines Integrators ein Istwert des Magnetventils gebildet;
7.3 der Istwert wird in einem A/D-Wandler in einen digitalen Istwert gewandelt und in einen ersten Bereich eines Speichers einer Rechnereinrichtung eingelesen;

dadurch gekennzeichnet, daß

7.4 der in den ersten Bereich des Speichers eingelesene digitale Istwert wird mit einem in einem zweiten Bereich des Speichers abgelegten digitalen Summenwert aus korrigiertem digitalen Sollwert für das Magnetventil und einem einstellbaren digitalen Hysteresewert für das Magnetventil verglichen;
7.5 der Ausgang der Rechnereinrichtung zum Ausgangstreiber wird auf NULL gesetzt, wenn der digitale Istwert größer oder gleich dem digitalen Summenwert ist und
7.6 wenn der digitale Istwert kleiner als der digitale Summenwert ist, wird der digitale Istwert mit einem in einem dritten Bereich der Rechnereinrichtung abgelegten digitalen Sollwert für das Magnetentil verglichen und

7.6.1 der Ausgang der Rechnereinrichtung zum Ausgangstreiber auf EINS gesetzt, wenn der digitale Istwert kleiner als der digitale Sollwert des Magnetventiles ist und
7.6.2 ein Setzen des Ausgangs zum Ausgangstreiber erfolgt nicht, wenn der digitale Istwert größer oder gleich dem digitalen Sollwert ist und

7.7 nach einer Abtastzeit Δt wird erneut ein analoges Meßsignal vom Magnetventil aufgenommen.

8. Verfahren zur digitalen Zweipunktregelung nach einem der vorangegangenen Ansprüche 5 bis 7, dadurch gekennzeichnet, daß die Abtastzeit im Bereich 0,1 bis 10 Millisekunden liegt.

9. Verfahren zur digitalen Zweipunktregelung nach einem der Ansprüche 5 bis 7, dadurch gekennzeichnet, daß die Abtastzeit bei ungefähr einer 1 Millisekunde liegt.

**Claims**

1. Electronic controller for an electrohydraulic control system for a gearbox, wherein the electrohydraulic control system comprises at least one solenoid valve and means for picking up an analog measurement signal of the solenoid valve (1), and the electronic controller comprises means for forming a solenoid valve actual value from the analog measurement signal for controlling the solenoid valve, a computer (70) with a memory and an output driver, as well as at least one A/D converter for converting the analog solenoid valve actual value into a digital value, characterised in that a digital on-off controller is provided for controlling the solenoid valve(s) by means of a cyclically called set/actual value comparison and the means for picking up the analog measurement signal of the solenoid valve comprise a measurement coil for picking up an induced voltage signal and the analog solenoid valve actual value generator comprises an integrator for forming a magnetic force actual value signal of the solenoid valve(s) from the picked up voltage measurement signal(s).

2. Electronic controller according to claim 1, characterised in that means are provided for compensating or standardising the digital on-off controller so the same control behaviour of the electronic controller for the solenoid valve(s) is always obtained regardless of the tolerances of the components of the actual value generator and/or of the solenoid valve(s).

3. Electronic controller according to claim 2, characterised in that the means for compensating or standardising the digital on-off controller comprise means for taking reference measurements and means for determining a correction factor for the set value of the digital on-off controller.

4. Electronic controller according to one of claims 1 to 3, characterised in that the electronic controller comprises a multiplexer for the sequential control of a plurality of solenoid valves.

5. Process for the digital on-off control of at least one solenoid valve of an electrohydraulic controller of a gearbox by means of an electronic controller, according to one of claims 1 to 4, wherein reference measurements for determining correction factors for the electronic control of the solenoid valve(s) are taken and the reference value(s) are filed in a reference value memory region of a computer, and the control of one of the solenoid valves comprises the following steps:

5.1 an induced voltage signal of a solenoid valve (1) is picked up;

5.2 an actual value of the solenoid valve is formed from the induced voltage signal by means of an integrator;

5.3 the actual value is converted into a digital actual value in an A/D converter and is read into a first region of a memory of a computer;

the process is characterised in that

5.4 the digital actual value read into the first region of the memory is compared with a digital set value for the solenoid valves filed in a second memory region, the set value being standardised or multiplied by the correction value of the solenoid valve filed in the correction value memory;

5.5 the output of the computer to an output driver for the solenoid valve(s) is set to a logic ZERO when the digital actual value is greater than or equal to the digital set value and

5.6 the output of the computer to the output driver is set to a logic ONE when the digital actual value is smaller than the digital set value and

5.7 after a scanning time $\Delta t$, an analog actual value of the solenoid valve is read in again.

6. Process for the digital on-off control of at least one solenoid valve of an electrohydraulic controller of a gearbox by means of an electronic controller, according to one of claims 1 to 4, wherein reference measurements for determining correction factors for the electronic control of the solenoid valve(s) are taken and the reference value(s) are filed in a reference value memory region of a computer, and the control of one of the solenoid valves comprises the following steps:

6.1 an induced voltage signal of a solenoid valve (1) is picked up;

6.2 an actual value of the solenoid valve is formed from the induced voltage signal by means of an integrator;

6.3 the actual value is converted into a digital actual value in an A/D converter and is read into a first region of a memory of a computer;

characterised in that

6.4 the difference between the digital actual value read into the first region of the memory and a digital set value filed in the second region of the memory region for the solenoid valve is formed;

6.5 the output of the computer to an output driver for the solenoid valve is set to ZERO when the difference formed in step 9.4 is greater than or equal to zero;

6.6 the output of the computer to the output driver is set to ONE when the difference formed in step 6.1 is smaller than zero and

6.7 after a scanning time $\Delta t$, an analog measurement signal is read in from the solenoid valve again.

7. Process for the digital on-off control of at least one solenoid valve of an electrohydraulic controller of a gearbox by means of an electronic controller, according to one of claims 1 to 4, wherein reference measurements for determining correction factors for the electronic control of the solenoid valve(s) are taken and the reference value(s) are filed in a reference value memory region of a computer, and the control of one of the solenoid valves comprises the following steps:

7.1 an induced voltage signal of a solenoid valve (1) is picked up;

7.2 an actual value of the solenoid valve is formed from the induced voltage signal by means of an integrator;

7.3 the actual value is converted into a digital actual value in an A/D converter and is read into a first region of a memory of a computer;

characterised in that

7.4 the digital actual value read into the first region of the memory is compared with a digital sum value of corrected digital set value, filed in a second region of the memory, for the solenoid valve and an adjustable digital hysteresis value for the solenoid valve;

7.5 the output of the computer to the output driver is set to ZERO when the digital actual value is greater than or equal to the digital sum value and

7.6 the digital actual value is compared with a digital set value filed in a third region of the computer for the solenoid valve when the digital actual value is smaller than the digital sum value and

7.6.1 the output of the computer to the output driver is set to ONE when the digital actual value is smaller than the digital set value of the solenoid valve and

7.6.2 the output to the output driver is not set when the digital actual value is greater than or equal to the digital set value and

7.7 after a scanning time $\Delta t$, an analog measurement signal is picked up from the solenoid valve again.

8. Process for digital on-off control according to one of the preceding claims 5 to 7, characterised in that the scanning time lies in the range of 0.1 to 10 milliseconds.

9. Process for digital on-off control according to one of claims 5 to 7, characterised in that the scanning time is about 1 millisecond.

**Revendications**

1. Commande électronique pour un système de commande électro-hydraulique pour une boîte de transmission, le système de commande électro-hydraulique comportant au moins une électrovanne et des moyens pour enregistrer un signal de mesure analogique provenant de l'électrovanne (1) et la commande électronique comportant des moyens pour la formation d'une valeur réelle de l'électrovanne à partir du signal de mesure analogique pour la régulation des/de l'électrovanne(s), un équipement à calculateur (70) avec une mémoire et un pilote de sortie ainsi qu'au moins un convertisseur Analogique/Numérique pour la conversion de la valeur réelle analogique de l'électrovanne en une valeur numérique,
caractérisée en ce que
un régulateur tout ou rien numérique est prévu pour la régulation des (de l') électrovanne(s) au moyen d'une comparaison des valeurs de consigne/valeurs réelles appelée de façon cyclique et que les moyens pour l'enregistrement du signal de mesure analogique de l'électrovanne comprennent une bobine de mesure pour l'enregistrement d'un signal de tension induit et que le conformateur de la valeur réelle analogique de l'électrovanne comprend un intégrateur pour la formation d'un signal de valeur réelle de la force magnétique des (de l') électrovanne(s) à partir des (du) signaux(signal) de mesure de tension enregistré(s).

2. Commande électronique selon la revendication 1, caractérisée en ce que des moyens pour l'alignement resp. la normalisation du régulateur numérique tout ou rien sont prévus de sorte que le comportement de régulation de la commande électronique pour les (l') électrovanne(s) soit toujours le même, indépendemment des tolérances des composants du conformateur de valeur réelle et/ou des (de l') électrovanne(s).

3. Commande électronique selon la revendication 2, caractérisée en ce que les moyens pour l'alignement resp. la normalisation du régulateur numérique tout ou rien comprennent des moyens pour la réalisation de mesures de référence et des moyens pour déterminer un facteur de correction pour la valeur de consigne du régulateur numérique tout ou rien.

4. Commande électronique selon l'une des revendications 1 à 3, caractérisée en ce que la commande électronique comporte un multiplexeur pour la régulation séquentielle d'une multiplicité d'électrovannes.

5. Procédé pour la régulation numérique tout ou rien d'au moins une électrovanne d'une commande électro-hydraulique d'une boîte de transmission au moyen d'une commande électronique, conformément à l'une des revendications 1 à 4, des mesures de référence étant effectuées pour la détermination de facteurs de correction pour la régulation électronique des (de l') électronvanne (s) et la (les) valeur (s) de référence étant enregistrée(s) dans une zone de mémoire de valeurs de référence d'un équipement à calculateur, la régulation de l'une des électrovannes comprenant les opérations suivantes:

5.1 un signal de tension induit d'une électrovanne (1) est enregistré;
5.2 une valeur réelle de l'électrovanne est formée au moyen d'un intégrateur à partir du signal de tension induit;
5.3 la valeur réelle est convertie en une valeur réelle numérique dans un convertisseur analogique/numérique et entrée en lecture dans une première zone d'une mémoire d'un équipement à calculateur;

Le procédé est caractérisé en ce que

5.4 la valeur réelle numérique entrée en lecture dans la première zone de la mémoire est comparée à une valeur de consigne numérique pour les électrovannes enregistrée dans une seconde zone de mémoire, la valeur de consigne ayant été normalisée resp. multipliée par la valeur de correction de l'électrovanne qui est enregistrée dans la mémoire de valeurs de correction;

5.5 la sortie de l'équipement à calculateur vers un pilote de sortie pour les (l') électrovanne (s) est forcée à un ZERO logique lorsque la valeur réelle numérique est supérieure ou égale à la valeur de consigne numérique et

5.6 la sortie de l'équipement à calculateur vers le pilote de sortie est forcée à un UN logique lorsque la valeur réelle numérique est inférieure à la valeur de consigne numérique et

5.7 une valeur réelle analogique de l'électrovanne est de nouveau lue en entrée après un temps d'échantillonnage Ät.

6. Procédé pour la régulation numérique tout ou rien d'au moins une électrovanne d'une commande électro-hydraulique d'une boîte de transmission au moyen d'une commande électronique, conformément à l'une des revendications 1 à 4, des mesures de référence étant effectuées pour déterminer des facteurs de correction pour la régulation électronique des (de l') électrovanne(s) et la (les) valeurs(s) de référence étant enregistrée(s) dans une zone de mémoire de valeurs de référence d'un équipement à calculateur, la régulation de l'une des électrovannes comprenant les opérations suivantes:

6.1 un signal de tension induit d'une électrovanne (1) est enregistré;

6.2 une valeur réelle de l'électrovanne est formée au moyen d'un intégrateur à partir du signal de tension induit;

6.3 la valeur réelle est convertie en une valeur réelle numérique dans un convertisseur analogique/numérique et entrée en lecture dans une première zone d'une mémoire d'un équipement à calculateur;

caractérisé en ce que

6.4 la différence entre la valeur réelle numérique entrée en lecture dans la première zone de la mémoire et une valeur de consigne numérique pour l'électrovanne enregistrée dans une seconde zone de la zone de mémoire est formée;

6.5 la sortie de l'équipement à calculateur vers un pilote de sortie pour l'électrovanne est forcée à ZERO lorsque la différence formée lors de l'opération 9.4 est supérieure ou égale à zéro;

6.6 la sortie de l'équipement à calculateur vers le pilote de sortie est forcée à UN lorsque la valeur de la différence formée lors de l'opération 6.1 est inférieure à zéro et

6.7 un signal de mesure analogique de l'électrovanne est de nouveau lu en entrée après un temps d'échantillonnage Ät.

7. Procédé pour la régulation numérique tout ou rien d'au moins une électrovanne d'une commande électro-hydraulique d'une boîte de transmission au moyen d'une commande électronique, conformément à l'une des revendications 1 à 4, des mesures de référence étant effectuées pour déterminer des facteurs de correction pour la régulation électronique des (de l') électrovanne(s) et la (les) valeurs(s) de référence étant enregistrée(s) dans une zone de mémoire de valeurs de référence d'un équipement à calculateur, la régulation de l'une des électrovannes comprenant les opérations suivantes:

7.1 un signal de tension induit d'une électrovanne (1) est enregistré;

7.2 une valeur réelle de l'électrovanne est formée au moyen d'un intégrateur à partir du signal de tension induit;

7.3 la valeur réelle est convertie en une valeur réelle numérique dans un convertisseur analogique/numérique et entrée en lecture dans une première zone d'une mémoire d'un équipement à calculateur;

caractérisé en ce que

7.4 la valeur réelle numérique entrée en lecture dans la première zone de la mémoire est comparée à une valeur somme numérique enregistrée dans une seconde zone de la mémoire, formée à partir de la valeur de consigne numérique corrigée pour l'électrovanne et une valeur d'hystérésis numérique réglable pour l'électrovanne;

7.5 la sortie de l'équipement à calculateur vers le pilote de sortie est forcée à ZERO lorsque la valeur réelle numérique est supérieure ou égale à la valeur somme numérique et

7.6 lorsque la valeur réelle numérique est inférieure à la valeur somme numérique, la valeur réelle numérique est comparée à une valeur de consigne numérique pour l'électrovanne enregistrée dans une troisième zone de l'équipement à calculateur et

7.6.1 la sortie de l'équipement à calculateur vers le pilote de sortie est forcée à UN lorsque la valeur réelle numérique est inférieure à la valeur de consigne numérique de l'électrovanne et

7.6.2 un forçage de la sortie vers le pilote de sortie n'a pas lieu lorsque la valeur réelle numérique est supérieure ou égale à la valeur de consigne numérique et

7.7 un signal de mesure analogique de l'électrovanne est de nouveau lu en entrée après un temps d'échantillonnage Ät.

8. Procédé pour la régulation numérique tout ou rien selon d'une des revendications précédentes 5 à 7 caractérisé en ce que le temps d'échantillonnage est compris dans une plage de 0,1 à 10 millisecondes.

9. Procédé pour la régulation numérique tout ou rien selon d'une des revendications 5 à 7 caractérisé en ce que le temps d'échantillonnage est de l'ordre d'une milliseconde.

EP 0 894 292 B1

## Fig.1

14

## Fig.2

# Fig.3

# Fig.4

# Fig.5

```
                    ┌──────────┐
                    │  START   │
                    └────┬─────┘
         ┌───────────────┼───────────────┐
         │         ┌───────────┐          │
         │         │AD–Wandlung│          │
         │         │   des     │          │
         │         │  Istwerts │          │
         │         └─────┬─────┘          │
         │             ◇◇◇◇◇              │
         │          ◇◇◇◇◇◇◇◇◇◇◇           │
         │    Nein ◇◇  Istwert  ◇◇ Ja     │
         │       ◇◇◇ > Sollwert ◇◇◇       │
         │          ◇◇◇◇◇◇◇◇◇◇◇           │
         │             ◇◇◇◇◇              │
         │                                │
    ┌─────────┐                    ┌─────────┐
    │ Ausgang │                    │ Ausgang │
    │einschalten│                  │ausschalten│
    └────┬────┘                    └────┬────┘
         │                              │
    ┌─────────┐                    ┌─────────┐
    │Warte  Δt│                    │Warte  Δt│
    └────┬────┘                    └────┬────┘
         │                              │
         └──────────────────────────────┘
```

Fig.6

```
                        ┌──────────┐
                        │  START   │
                        └──────────┘
                             │
   ┌─────────────────────────┼─────────────────────────────┐
   │                         │                             │
   │                 ┌───────────────┐                     │
   │                 │  AD–Wandlung  │                     │
   │                 │     des       │                     │
   │                 │    Istwerts   │                     │
   │                 └───────────────┘                     │
   │                         │                             │
   │                       ◇◇◇◇◇                           │
   │              Ja     ◇  Istwert  ◇    Nein             │
   │          ┌─────────◇ > Sollwert ◇─────────┐           │
   │          │         ◇ + Hysterese◇         │           │
   │          │            ◇◇◇◇◇                │           │
   │   ┌─────────────┐                          │           │
   │   │  Ausgang    │                        ◇◇◇◇◇         │
   │   │ ausschalten │              Ja      ◇ Istwert ◇  Nein │
   │   └─────────────┘          ┌─────────◇< Sollwert◇──────┐ │
   │          │                 │          ◇◇◇◇◇            │ │
   │          │                 │                          │ │
   │   ┌─────────────┐          │   ┌─────────────┐        │ │
   │   │  Warte  Δt  │          └───│   Ausgang   │        │ │
   │   └─────────────┘              │ einschalten │        │ │
   │          │                     └─────────────┘        │ │
   └──────────┘                           │                │ │
                                          │◀───────────────┘ │
                                   ┌─────────────┐           │
                                   │  Warte  Δt  │           │
                                   └─────────────┘           │
                                          │                  │
                                          └──────────────────┘
```